# EUROPEAN PATENT APPLICATION

(11) **EP 4 318 240 A1**
(43) Date of publication of application: **07.02.2024**
(21) Application number: 22794478.2
(22) Date of filing: 30.03.2022
(51) Int. Cl.: G06F 9/54

(54) **MESSAGE REMINDER METHOD AND TERMINAL DEVICE**

(30) Priority: 30.04.2021 CN 202110480060
(71) Applicant: Huawei Technologies Co., Ltd., Shenzhen, Guangdong 518129 (CN)
(72) Inventor: ZHANG, Bo, Shenzhen, Guangdong 518129 (CN); WANG, Zezhi, Shenzhen, Guangdong 518129 (CN); CHEN, Zhibin, Shenzhen, Guangdong 518129 (CN); ZHANG, Zhiqun, Shenzhen, Guangdong 518129 (CN)
(74) Representative: Epping - Hermann - Fischer
(86) International application number: PCT/CN2022/084033
(87) International publication number: WO 2022/228005

(57) **Abstract**

A message reminding method and a terminal device are provided. The method includes: A first application receives a first message sent by a second application. The first message includes an identifier of the second application. The second application is an application that receives a new message. The first application and the second application are applications in a system carried by a simulator. The first application sends a second message to a simulator application. The second message includes the identifier of the second application. The second message indicates the simulator to determine whether to perform reminding on the new message received by the second application. According to the method, reminding may be implemented when an application in the simulator receives a new message, so that a user can view and process the message in time. Therefore, user experience is improved.

## Description

### CROSS-REFERENCE TO RELATED APPLICATIONS

This application claims priority to Chinese Patent Application No. 202110480060.8, filed with the China National Intellectual Property Administration on April 30, 2021 and entitled "MESSAGE REMINDING METHOD AND TERMINAL DEVICE", which is incorporated herein by reference in its entirety.

### TECHNICAL FIELD

This application relates to the field of communication technologies, and in particular, to a message reminding method and a terminal device.

### BACKGROUND

Currently, there are simulators of various brands in the market. For example, an Android simulator is a simulator that enables a user to run and simulate an Android operating system on a personal computer in addition to a native computer system, and can install, use, and uninstall Android application software. With the Android simulator, the user can use an Android application on an electronic device with the Android simulator even if the user does not have a mobile phone hardware device. For example, the Android simulator can simulate a running environment of an Android mobile phone on a computer, so that the user can experience Android games and applications on the computer.

A plurality of applications may be installed in the simulator. It is assumed that after the user starts a plurality of applications in the simulator, each application may correspond to one window. These windows may be displayed in a taskbar in a minimized form, or may be displayed on a display in a non-minimized (normal or maximized) form. However, regardless of whether a window corresponding to an application is in a minimized state or is overlaid by a window corresponding to another application, these applications are foreground applications by default. In this case, when a specific application receives a new message, because the application is a foreground application, the Android system does not generate a notification (reminder) message. To be specific, when an application in the simulator receives a new message, if a window corresponding to the application is in a minimized state or is overlaid by a window corresponding to another application, the user cannot perceive the new message on the personal computer, that is, the user cannot be reminded.

### SUMMARY

This application provides a message reminding method and a terminal device, to implement reminding when an application in a simulator receives a message, to improve user experience.

According to a first aspect, this application provides a message reminding method. The method includes: A first application receives a first message sent by a second application. The first message includes an identifier of the second application. The second application is an application that receives a new message. The first application and the second application are applications in a system carried by a simulator. The first application sends a second message to a simulator application. The second message includes the identifier of the second application. The second message indicates the simulator to determine whether to perform reminding on the new message received by the second application.

The second application is a foreground application after being started. Therefore, according to the foregoing technical solution, when the second application in the simulator receives the new message, the first application in the simulator may send the identifier of the second application to the simulator, and then the simulator further determines whether to perform reminding on the new message. In this way, reminding is implemented on the message of the foreground application in the simulator, so that a user can view the new message in time. Therefore, user experience is improved.

In a possible design, there is at least one first message.

According to the foregoing technical solution, when a plurality of applications receive new messages, the first application may receive a plurality of first messages, and send identifiers of the plurality of applications to the simulator.

In a possible design, that a first application receives a first message sent by a second application includes: The first application receives the first message sent by the second application through a third application.

According to the foregoing technical solution, when the second application receives the new message, the second application may invoke an interface of the third application to send the first message to the third application, and then the first message is forwarded to the first application. In a possible design, the first message further includes a quantity of new messages received by the second application and content of the new message received by the second application. According to the foregoing technical solution, when the first message further includes the quantity of new messages and/or the content of the new message, the first application may send the quantity of new messages and/or the content of the new message to the simulator, so that the simulator subsequently reminds the user of the quantity of new messages and/or the content of the new message. Therefore, user experience is improved.

In a possible design, the simulator is an Android simulator.

When the simulator is an Android simulator, the application in the simulator is an Android application. Certainly, the system of the simulator is not specifically limited in this application. In a possible design, the first application is a desktop application, and the second application is an email application or a HUAWEI video application.

According to a second aspect, this application further provides a message reminding method, including:
a simulator receives a first message sent by a first application, where the first message includes an identifier of a second application, the second application is an application that receives a new message, and the first application and the second application are applications in a system carried by a simulator; the simulator determines a corresponding second window identifier based on the identifier of the second application; and the simulator determines, based on the second window identifier and a window identifier of a mouse focus window, whether to perform reminding on the new message received by the second application.

According to the foregoing technical solution, the simulator may learn, based on the application identifier included in the first message, which application in the simulator receives the new message, and then compare the window identifier corresponding to the application identifier with the window identifier of the mouse focus window, to determine whether reminding needs to be performed on the new message.

In a possible design, the first message is sent by the second application to the first application.

In a possible design, the first message is sent by the second application to the first application through a third application.

According to the foregoing technical solution, the first message may be directly sent by the second application to the first application, or may be sent by the second application to the third application and forwarded by the third application to the first application.

In a possible design, that the simulator determines, based on the second window identifier and a window identifier of a mouse focus window, whether to perform reminding on the new message received by the second application includes:
if the simulator determines that the second window identifier is different from the window identifier of the mouse focus window, the simulator determines to perform reminding on the new message received by the second application; or if the simulator determines that the second window identifier is the same as the window identifier of the mouse focus window, the simulator determines not to perform reminding on the new message received by the second application. According to the foregoing technical solution, if the window identifier of the new message is different from the window identifier of the mouse focus window, reminding needs to be performed on the new message; or if the window identifier of the new message is the same as the window identifier of the mouse focus window, it indicates that a user may directly see the new message, and in this case, the user does not need to be reminded in a reminding manner.

In a possible design, the first message further includes a quantity of new messages received by the second application and content of the new message received by the second application.

In a possible design, a reminding manner for performing reminding on the new message received by the second application includes at least one of the following manners: application icon flickering, application window flickering, a pop-up window, a notification, and application window shaking. The pop-up window or the notification includes the quantity of new messages and/or the content of the new message.

According to the foregoing technical solution, the simulator may remind the user of the new message in a manner such as application icon flickering, application window flickering, or the notification, so that the user can view and process the new message in time. Therefore, user experience can be improved.

According to a third aspect, this application further provides a terminal device. The terminal device includes a display, one or more processors, one or more memories, a plurality of applications, and one or more computer programs. The one or more computer programs are stored in the one or more memories. The one or more computer programs include instructions. When the instructions are invoked and executed by the one or more processors, the terminal device is enabled to perform the technical solutions in the first aspect, the second aspect, and any possible design of the first aspect and the second aspect.

According to a fourth aspect, this application further provides a terminal device. The electronic device includes modules/units for performing the method in the first aspect, the second aspect, or any possible design of the first aspect and the second aspect. The modules/units may be implemented by hardware, or may be implemented by hardware by executing corresponding software.

According to a fifth aspect, an embodiment of this application further provides a chip. The chip is coupled to a memory in an electronic device, to perform the technical solutions in the first aspect, the second aspect, and any possible design of the first aspect and the second aspect. "Couple" in embodiments of this application means that two components are directly or indirectly connected to each other.

According to a sixth aspect, an embodiment of this application further provides a computer-readable storage medium. The computer-readable storage medium includes a computer program. When the computer program runs on an electronic device, the electronic device is enabled to perform the technical solutions in the first aspect, the second aspect, and any possible design of the first aspect and the second aspect of embodiments of this application.

According to a seventh aspect, an embodiment of this application further provides a computer program product. When the computer program product runs on a terminal device, the computer program product is enabled to perform the technical solution in the second aspect and any possible design of the second aspect of embodiments of this application.

For each of the third aspect to the seventh aspect and technical effects that may be achieved in each of the third aspect to the seventh aspect, refer to descriptions of the technical effects that may be achieved in the possible solutions in the first aspect and the second aspect. Details are not described herein again.

### BRIEF DESCRIPTION OF DRAWINGS

FIG. 1 is a schematic diagram of a hardware structure of a terminal device according to an embodiment of this application;
FIG. 2 is a block diagram of a structure of a terminal device 100 according to an embodiment of this application;
FIG. 3A, FIG. 3B, and FIG. 3C are schematic diagrams of a user interface according to an embodiment of this application;
FIG. 4 is a flowchart of a message reminding method according to an embodiment of this application;
FIG. 5 is a schematic diagram of a user interface according to an embodiment of this application;
FIG. 6A(a) and FIG. 6A(b) are schematic diagrams of a user interface according to an embodiment of this application;
FIG. 6B(a) and FIG. 6B(b) are schematic diagrams of a user interface according to an embodiment of this application;
FIG. 6C(a) and FIG. 6C(b) are schematic diagrams of a user interface according to an embodiment of this application;
FIG. 6D(a) and FIG. 6D(b) are schematic diagrams of a user interface according to an embodiment of this application; and
FIG. 7 is a schematic diagram of a structure of another terminal device according to an embodiment of this application.

### DESCRIPTION OF EMBODIMENTS

The following describes the technical solutions in embodiments of this application in detail with reference to the accompanying drawings in the following embodiments of this application.

An application in embodiments of this application is a software program capable of implementing one or more specific functions. Generally, a plurality of applications may be installed on a terminal device, for example, a camera application, a mailbox application, a video application, a music application, a chat application, WeChat, and WeLink. The application mentioned below may be an application installed when the terminal device is delivered from a factory, or may be an application downloaded from a network or obtained from another terminal device in a process in which a user uses the terminal device.

It should be noted that a message reminding method provided in embodiments of this application may be applied to a terminal device having a display, for example, a personal computer (Personal Computer, PC) (for example, a tablet computer, a notebook computer, or an ultra-mobile personal computer (ultra-mobile personal computer, UMPC)), or a smart screen. This is not limited in embodiments of this application. In addition, an example embodiment of the terminal device includes but is not limited to a terminal device carrying iOS^{®}, Android^{®}, Microsoft^{®}, HarmonyOS^{®}, or another operating system.

The following describes a structure of the terminal device.

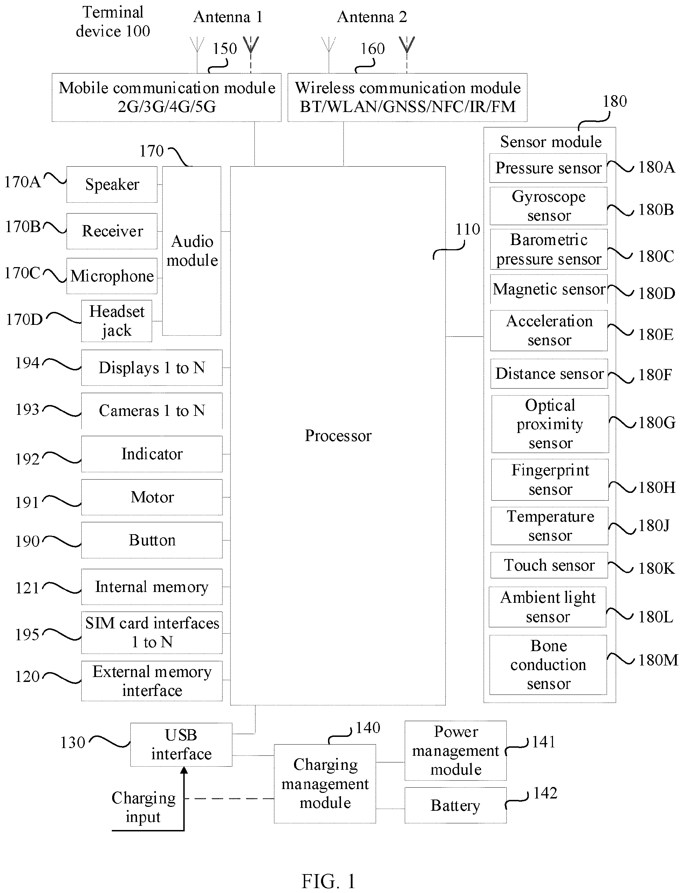

As shown in FIG. 1, a terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors. The controller may be a nerve center and a command center of the terminal device 100. The controller may generate an operation control signal based on an instruction operation code and a timing signal, to implement control on instruction fetching and execution. The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to the USB standard specification, and may be specifically a mini USB interface, a micro USB interface, a USB Type-C interface, or the like. The USB interface 130 may be configured to connect a charger to charge the terminal device 100, and may also be configured to transmit data between the terminal device 100 and a peripheral device. The charging management module 140 is configured to receive a charging input from the charger. The power management module 141 is configured to connect the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the terminal device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the terminal device 100 can be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a solution, applied to the terminal device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave through the antenna 1 for radiation. In some embodiments, at least some function modules of the mobile communication module 150 may be disposed in the processor 110. In some embodiments, at least some function modules of the mobile communication module 150 may be disposed in a same device as at least some modules of the processor 110.

The wireless communication module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation. For example, in embodiments of this application, communication connections may be established between different electronic devices through BT or the WLAN.

In some embodiments, in the terminal device 100, the antenna 1 and the mobile communication module 150 are coupled, and the antenna 2 and the wireless communication module 160 are coupled, so that the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a fifth generation (the fifth generation, 5G) mobile communication system, a future communication system such as a sixth generation (6th generation, 6G) system, BT, the GNSS, the WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1. In embodiments of this application, the display 194 may be configured to simultaneously display a plurality of application interfaces.

The camera 193 is configured to capture a still image or a video. The camera 193 may include a front-facing camera and a rear-facing camera.

The internal memory 121 may be configured to store computer-executable program code. The executable program code includes instructions. The processor 110 performs various function applications and data processing of the terminal device 100 by running the instructions stored in the internal memory 121. The internal memory 121 may include a program storage region and a data storage region. The program storage region may store an operating system, software code of at least one application (for example, an iQIYI application or a WeChat application), and the like. The data storage region may store data (for example, an image or a video) generated in a process of using the terminal device 100, and the like. In addition, the internal memory 121 may include a high-speed random access memory, and may further include a non-volatile memory, for example, at least one magnetic disk storage device, a flash memory, and a universal flash storage (universal flash storage, UFS).

The external memory interface 120 may be configured to connect an external memory card, for example, a micro SD card, to extend a storage capability of the terminal device 100. The external memory card communicates with the processor 110 through the external memory interface 120, to implement a data storage function. For example, files such as pictures or videos are stored in the external memory card.

The terminal device 100 may implement an audio function such as music playing or recording through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The terminal device 100 may receive a button input, and generate a button signal input related to user setting and function control of the terminal device 100. The motor 191 may generate a vibration alert. The motor 191 may be configured for vibration alerts for incoming calls, and may be further configured for touch vibration feedback. For example, touch operations performed on different applications (for example, photographing and audio playing) may correspond to different vibration feedback effects. The indicator 192 may be an indicator light, and may be configured to indicate a charging status and a power change, or may be configured to indicate a message, a missed call, a notification, and the like. The SIM card interface 195 is configured to connect a SIM card. The SIM card may be inserted into the SIM card interface 195 or removed from the SIM card interface 195, to implement contact with or separation from the terminal device 100.

It may be understood that the components shown in FIG. 1 do not constitute a specific limitation on the electronic device. The electronic device may further include more or fewer components than those shown in the figure, combine some components, split some components, or have a different component arrangement. In the following embodiment, the terminal device 100 shown in FIG. 1 is used as an example for description.

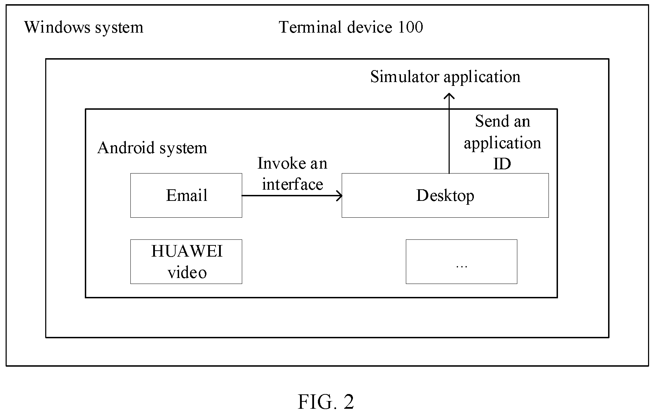

FIG. 2 is a block diagram of the structure of the terminal device 100 according to an embodiment of this application. As shown in FIG. 2, the terminal device 100 may be an electronic device carrying a Windows system. A plurality of applications, for example, a simulator application (simulator name.exe), may be installed in the Windows system. The simulator application may be an application carrying an Android system. The Android system may include a plurality of Android applications, for example, an email application, a HUAWEI video application, and a desktop.

In this embodiment of this application, when an application (for example, Emails) in the Android system receives a new message, the email APP may invoke an interface of the desktop APP in the Android system. In this way, the desktop APP may know that the email APP receives the new message. In this case, the desktop APP may notify the simulator application of an application ID (application identifier) of the email APP. Correspondingly, the simulator application may determine, based on a relationship between a window in which a mouse focus of a user is located and a window of the email APP, whether the user needs to be reminded. If the window in which the mouse focus of the user is located is different from the window of the email APP, the simulator may determine that the user needs to be reminded; or if the window in which the mouse focus of the user is located is the same as the window of the email APP, the simulator may determine that the user does not need to be reminded.

In the following embodiment, application to the structure of the terminal device 100 shown in FIG. 1 is used as an example for description.

In addition, in the following embodiment, "at least one" means one or more, and "a plurality of" means two or more. In addition, it should be understood that in the descriptions of this application, terms such as "first" and "second" are merely used for distinguishing and description.

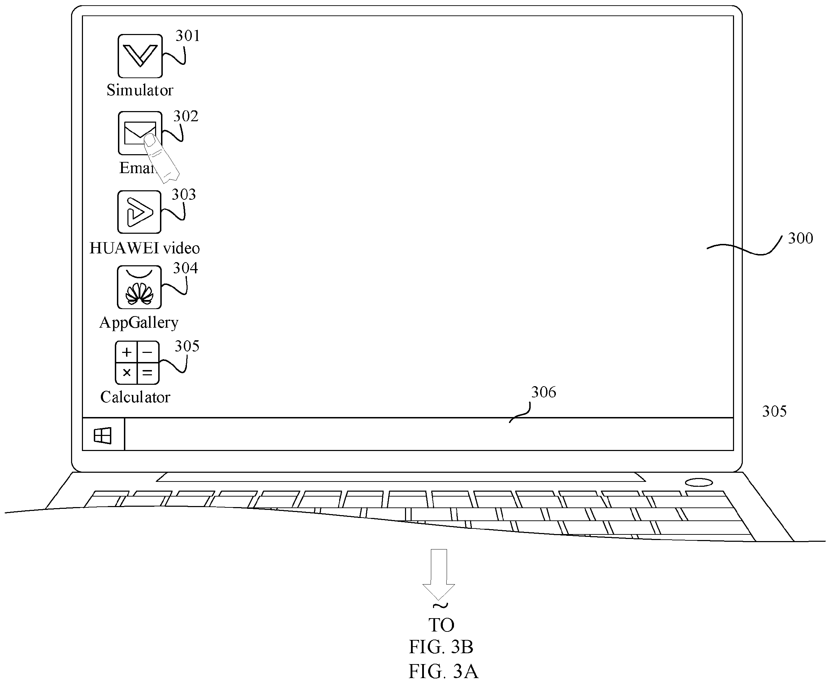

An application scenario of embodiments of this application is described first. For example, the terminal device is a notebook computer. In this application, a simulator application (a simulator for short) may be installed on the notebook computer. The notebook computer may run a Windows system. If the simulator installed on the notebook computer is an Android simulator, an Android application may be used on the notebook computer. For example, as shown in FIG. 3A, it is assumed that the notebook computer displays an interface 300. The interface 300 may include an icon of at least one application, for example, may include an application icon 301 of "Simulator", an application icon 302 of "Email", an application icon 303 of "HUAWEI video", an application icon 304 of "AppGallery", and an application icon 305 of "Calculator". "Email", "HUAWEI video", and "AppGallery" may be applications installed in the simulator. To be specific, the simulator places the application icons on a Windows desktop after installing the applications. Certainly, the interface 300 may further include a taskbar 306. It should be understood that in actual product implementation, the application icon 301 of "Simulator" may be displayed, or may not be displayed.

After the user taps the application icon 302 of "Email", the notebook computer may enter a display interface of the email application in response to a tapping operation of the user. For example, the notebook computer may display an interface 310. The interface 310 may include an application window 311 of "Email". Then, the user may tap the application icon 303 of "HUAWEI video". In this case, the notebook computer may display an interface 320. The interface 320 may include the application window 311 of "Email" and an application window 321 of "HUAWEI video". In other words, the notebook computer may display a plurality of application windows, and each application window corresponds to one application.

It should be noted that the application window 311 and the application window 321 each may further include a minimize icon, a maximize icon, a close button, and the like. The minimize icon is used to display the application window on the taskbar 306 in a minimized manner. The maximize icon is used to display the application window in full screen on the display interface of the notebook computer. The close button is used to close the application window.

It should be noted that after an application in the simulator is started, regardless of whether the application is directly displayed on the display or is displayed on the taskbar in the minimized manner, for an Android system carried by the simulator, the application is a foreground application by default. For the Windows system, the simulator and the application started in the Android system carried by the simulator may be understood as different processes, or a process corresponding to the simulator is understood as a process, and the application started in the Android system is understood as a subprocess of the process.

It should be understood that the foregoing interface is merely an example for description. In actual product implementation, more or fewer icons may be displayed on the display interface. This is not specifically limited in this application.

In some embodiments, when an application in the simulator is started, the simulator may allocate a window identity (identity, ID) (or referred to as a window number or a window identifier) to a window in which the application is located, and distinguish, by using window identities, windows of Android applications running in the simulator. Specifically, after the user taps an application icon of an Android application in the Android system carried by the simulator, the simulator may send a first notification message to the Android system, to notify the Android system of which application needs to be started. Then, after receiving the notification message, the Android system may start the Android application, and after starting the application, return, to the simulator, a second notification message carrying an application ID of the Android application, to notify the simulator that the Android application is already started. When receiving the second notification message, the simulator may allocate a corresponding window ID to the application based on the application ID. To be specific, in the foregoing manner, when the Android application is started, the simulator may actively allocate the window ID corresponding to the Android application to the Android application, to establish a correspondence between the Android application ID and the application window ID.

Certainly, the user may alternatively start an Android application or the like in a voice triggering manner. This is not limited in this application.

For example, for a correspondence between an application ID and a window ID, refer to the following Table 1. It should be understood that Table 1 is merely an example for description, and a manner of storing the correspondence, and a representation form of the application ID and the window ID are not limited in this application.

**Table 1**

| Application ID | Window ID |
|---|---|
| Application 1 | 1 |
| Application 2 | 2 |
| Application 3 | 3 |

It should be noted that when an application window is closed, that is, an application is closed, a correspondence between an application ID and a window ID of the application may be automatically deleted. When the application is started next time, a window ID may be re-allocated to the application.

In a possible implementation, the simulator may number, according to a starting sequence of the applications in the simulator, windows in which the applications are located. For example, it is assumed that the user starts the applications in the following sequence: the AppGallery APP, a WeChat APP, a reading APP, and the HUAWEI video APP. In this case, a window in which the AppGallery APP is located is denoted as a window 1, a window in which the WeChat APP is located is denoted as a window 2, a window in which the reading APP is located is denoted as a window 3, and a window in which the HUAWEI video APP is located is denoted as a window 4. It should be noted that the foregoing number is merely an example for description, and this is not limited in this application. For example, the window in which the AppGallery APP is located is denoted as a window 1-1, the window in which the WeChat APP is located is denoted as a window 1-2, the window in which the reading APP is located is denoted as a window 1-3, and the window in which the HUAWEI video APP is located is denoted as a window 1-4.

Optionally, in some embodiments, a number of a window in which an application is located is not constant. After a started application is closed, the simulator may renumber a window in which the application is located when the application is restarted. For example, it is assumed that the window in which the AppGallery APP is located is denoted as the window 1, the window in which the WeChat APP is located is denoted as the window 2, the window in which the reading APP is located is denoted as the window 3, and the window in which the HUAWEI video APP is located is denoted as the window 4. In this case, if the user closes one of the applications, for example, closes the WeChat APP, and then restarts the WeChat APP after a period of time (for example, 30s or 5 min), a window in which the WeChat APP is located is denoted as a window 5.

The following describes in detail the message reminding method in embodiments of this application based on the foregoing application scenario.

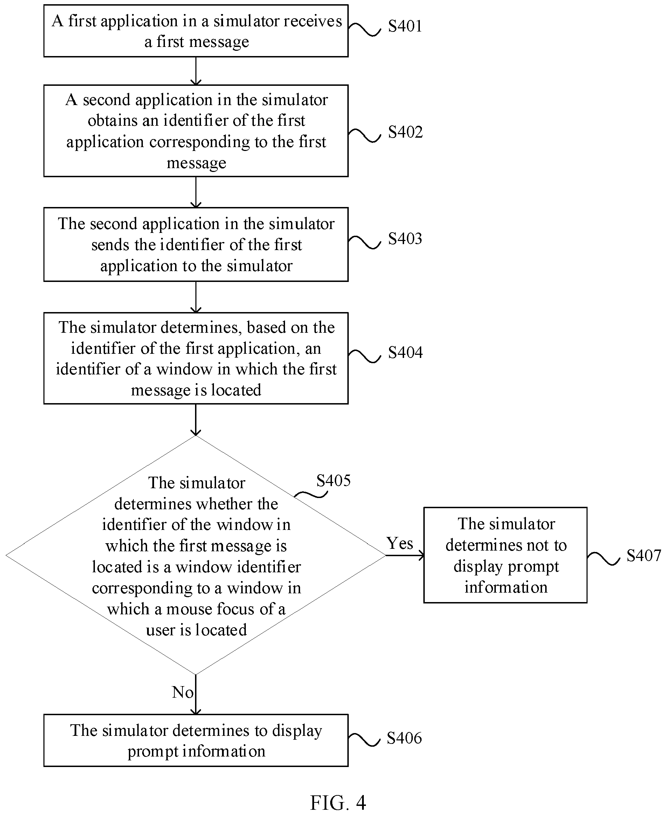

FIG. 4 is a flowchart of the message reminding method according to an embodiment of this application. Refer to FIG. 4. The method may include the following steps.

S401: A first application in the simulator receives a first message.

The first application in the simulator receives the first message, that is, an application in the simulator receives a new message. The new message may be a push message from a network, or may be a message from another device. It should be understood that there may be one or more first messages herein. This is not limited in this application. The first application is an Android application installed in the simulator, for example, "HUAWEI video" or "Email".

S402: The first application in the simulator invokes an interface of a second application, to send a second message to the second application.

The second message may include an identifier of the first application, a quantity of first messages, and content of the first message.

For ease of description, the Android application that receives the new message in the simulator may be denoted as the "first application", an Android desktop application in the simulator may be denoted as the "second application", and the received new message may be denoted as the "first message".

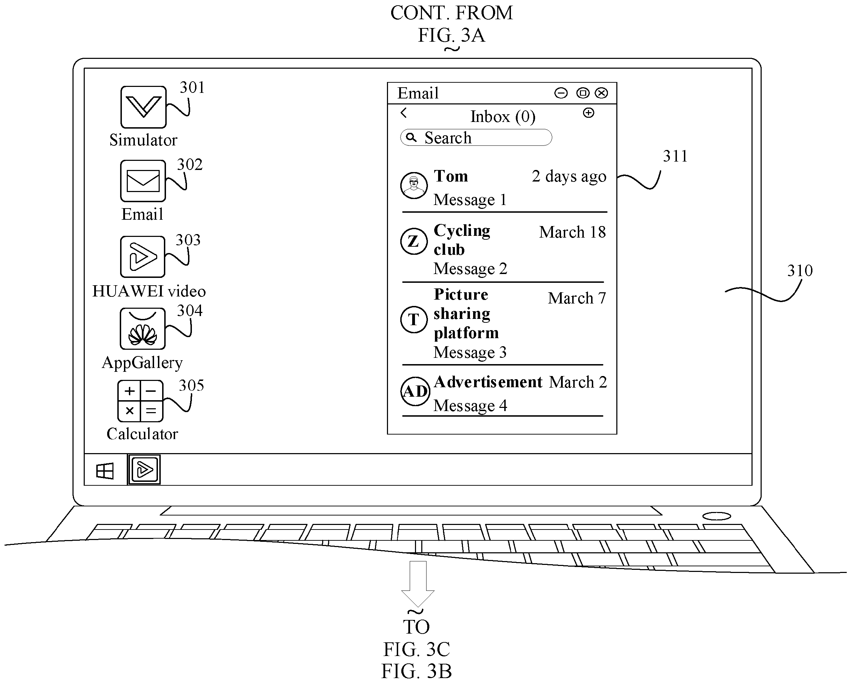

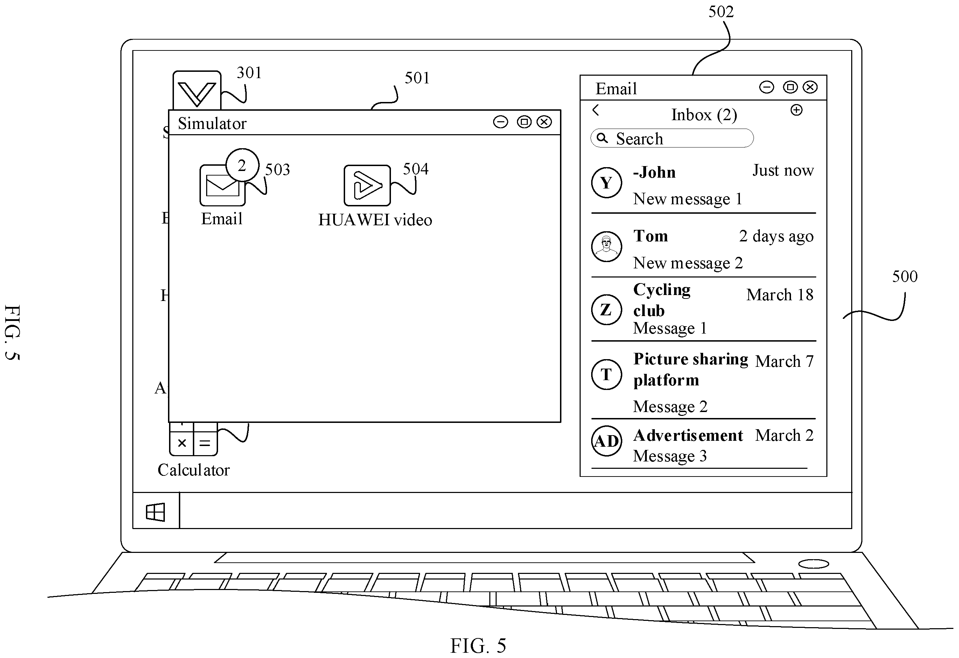

It should be noted that when the application receives the new message, the Android application that receives the new message usually invokes a badge interface of the desktop APP to notify the desktop APP that there is the new message, and then the desktop APP determines, based on a status of the application, whether a numeric badge needs to be updated. When the application is a foreground application, the desktop APP does not update the numeric badge; or when the application is a background application, the desktop APP updates the numeric badge. In other words, when the application receives the new message, regardless of whether the application is a foreground application or a background application, the badge interface of the desktop APP is invoked. For example, as shown in FIG. 5, the application interface shown in FIG. 3B is used as an example. After the user taps the application icon 301 of "Simulator" on the interface 310, it is assumed that the notebook computer displays an interface 500. The interface 500 may include a desktop window 501 of the Android system carried by the simulator and an application window 502 of "Email". The desktop may include an application icon of an Android application, for example, an application icon 503 of "Email" or an application icon 504 of "HUAWEI video". A numeric badge 2 may be displayed on the application icon 503 of "Email". The numeric badge 2 may indicate that two emails in the email APP are unread. In this case, if the email APP in the Android system carried by the simulator receives a new message, the email APP may invoke the badge interface of the desktop APP. In this case, the desktop APP determines, based on a status of "Email", whether to update the numeric badge of the email APP. In this case, the email APP is a foreground application, so that the numeric badge on the application icon of "Email" does not need to be updated.

It should be noted that in some special scenarios, for example, a video chat/voice chat scenario, the application may invoke a notification interface of the desktop APP to display a notification. In this embodiment of this application, when the application in the simulator receives the new message, regardless of whether the application invokes the badge interface or the notification interface, the application may be registered in the interface for listening, to notify the simulator when the new message is detected through listening to remind the user of the message. For example, it is assumed that an application interface of the HUAWEI video APP is currently displayed on the display of the notebook computer, that is, the HUAWEI video APP is a foreground application. In this case, when the WeChat APP receives a video chat notification message, the WeChat APP may invoke the notification interface of the desktop APP in the Android system carried by the simulator, to automatically switch the WeChat APP to a foreground APP.

S403: The second application in the simulator sends the identifier of the first application to the simulator.

In this embodiment of this application, when the first application receives the first message, the first application may send an application name (or referred to as an application identifier or an application ID) of the first application to the desktop APP, and then the desktop APP sends the application name to the simulator, so that the simulator can determine, based on the application name, an application window ID corresponding to the application name. In a possible implementation, information may be transmitted between the desktop APP and the simulator through a pre-negotiated transmission channel. For example, the desktop APP may send the application identifier to the simulator through a pipe channel.

Optionally, when the first application receives the first message, the first application may send an application name of the first application to a third application, and then the third application sends the application name of the first application to the simulator. It should be understood that the third application may be a preset application that is specially used to exchange information with the simulator.

S404: The simulator determines, based on the identifier of the first application, an identifier of a window in which the first message is located.

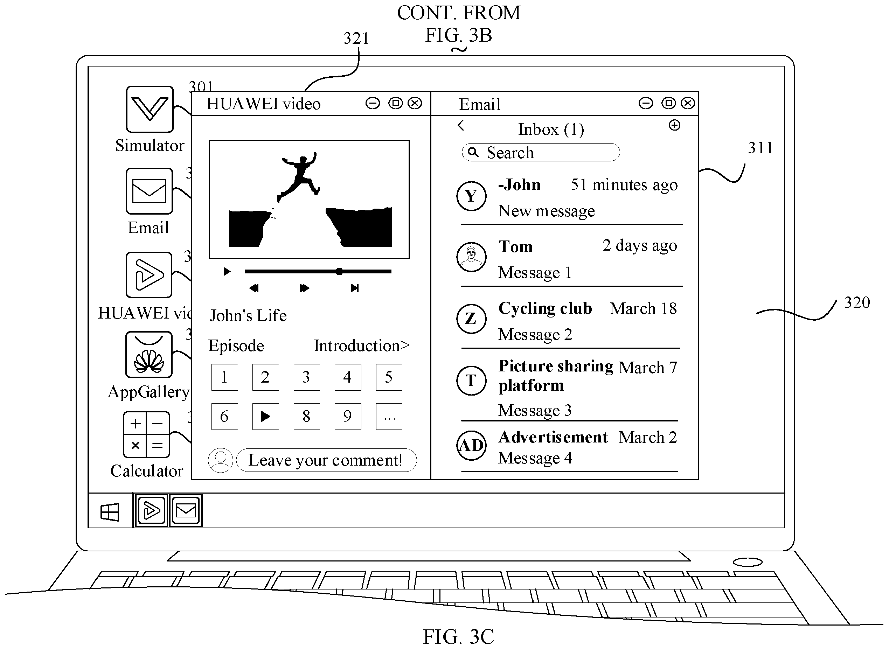

Based on the descriptions of the correspondence between an application ID and an application window ID in the embodiment shown in FIG. 3A, FIG. 3B, and FIG. 3C, it may be learned that after an Android application is started, the simulator application may know an application ID of the Android application. In this way, the simulator may allocate a window ID to the application based on the application ID.

After receiving the application identifier sent by the first application, the simulator may determine, based on the application identifier of the first application, a window identifier corresponding to the application identifier of the first application. For example, if the email APP receives a new message, the email APP may send a message to the desktop APP of the simulator. The message may carry an application identifier of the email APP. Correspondingly, the desktop APP may send the message to the simulator. Then, the simulator determines, based on the application identifier ("Email") carried in the message, a window ID corresponding to "Email". For example, the window ID is 1-1.

S405: The simulator determines whether the identifier of the window in which the first message is located is a window identifier corresponding to a window in which a mouse focus of the user is located. If the identifier of the window in which the first message is located is not the window identifier corresponding to the window in which the mouse focus of the user is located, S406 is performed; or if the identifier of the window in which the first message is located is the window identifier corresponding to the window in which the mouse focus of the user is located, S407 is performed.

It should be understood that the mouse focus means that after the window 1 is tapped with a mouse, the window 1 has the focus. When the user moves the mouse to another location, the mouse focus remains in a window in which the window 1 is located, provided that the user does not tap another window. In this case, if the user taps another window, for example, the window 2, the window 1 loses the mouse focus, and the window 2 has the mouse focus. In other words, the window in which the mouse focus is located may be understood as a window that the user operates with the mouse for the last time.

In some embodiments, before S404 is performed, the simulator may first obtain the window identifier corresponding to the window in which the mouse focus of the user is located. Then, the simulator determines whether the identifier of the window in which the first message is located is the same as the window identifier corresponding to the window in which the mouse focus of the user is located. Specifically, the simulator may determine, by reading values of window IDs, whether the window in which the mouse focus of the user is located is the same as the window in which the first message is located. For example, if the simulator reads that a window ID of the window in which the mouse focus of the user is located is 3 and a window ID of the window in which the first message is located is 2, the window in which the mouse focus of the user is located is different from the window in which the first message is located.

S406: The simulator determines to display prompt information.

In this embodiment of this application, when the simulator determines in S405 that the window in which the mouse focus of the user is located is different from the window in which the first message is located, the simulator may determine that the user needs to be reminded at this time, so that the user can process the message in time. Therefore, user experience can be improved. For example, when determining that the user needs to be reminded of the new message, that is, a window corresponding to the new message is consistent with the window in which the mouse focus is located, the simulator may notify the Windows of which window corresponding to a subprocess of a simulator process needs to flicker, and may set a flickering time interval and flickering duration. In this way, the Windows may flicker the corresponding window based on a window identifier corresponding to the subprocess, the flickering time interval, and the flickering duration.

For ease of description, in the following, the identifier of the window in which the first message is located may be denoted as a "first identifier", and the window identifier corresponding to the window in which the mouse focus of the user is located may be denoted as a "second identifier". It should be understood that the first identifier may be the same as or different from the second identifier. In S405, the first identifier is different from the second identifier. In S406, the first identifier is the same as the second identifier.

With reference to several possible application scenarios, the following describes in detail the case in which the first identifier is different from the second identifier.

Scenario 1: A first window in which the first message is located is displayed on the interface.

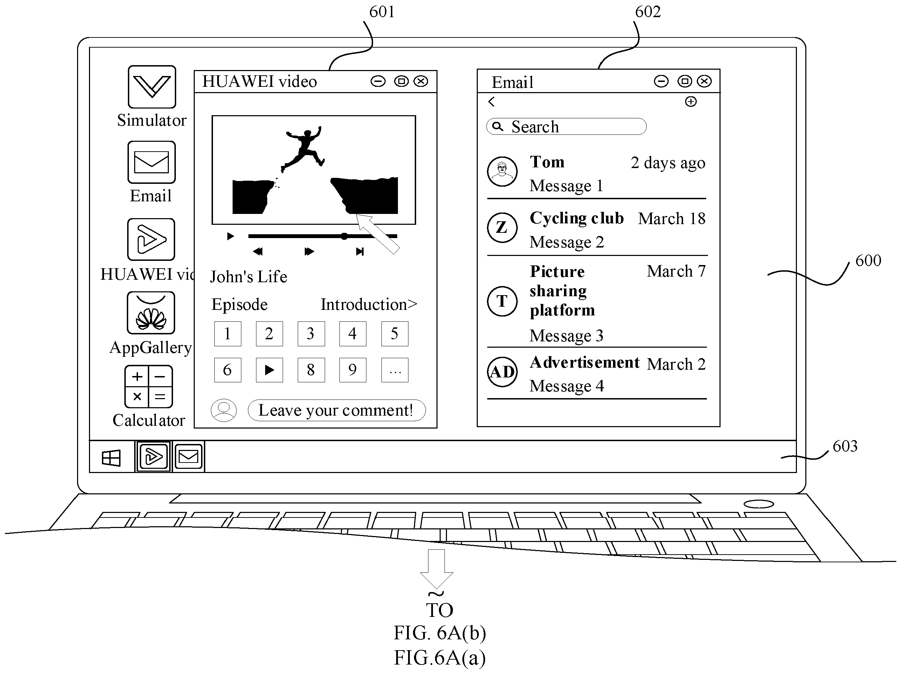

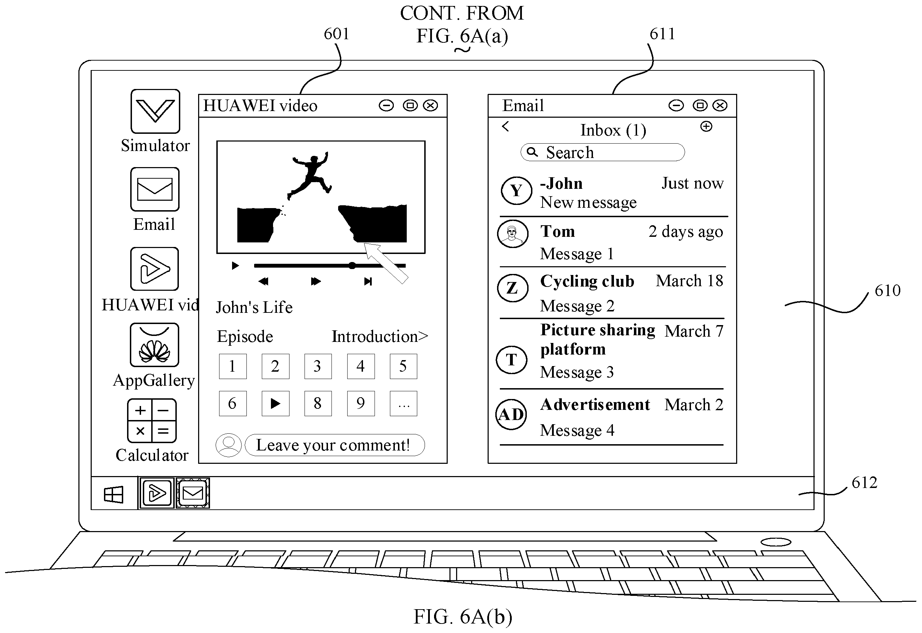

For Scenario 1, the following two possible implementation solutions may be specifically included. First: As shown in FIG. 6A(a), it is assumed that the notebook computer displays an interface 600. Two application windows, for example, an application window 601 of "Email" and an application window 602 of "HUAWEI video", and a taskbar 603 may be displayed on the interface 600. There is no overlapping part between the application window 601 of "Email" and the application window 602 of "HUAWEI video". In addition, the taskbar 603 may include an icon of an application started by the user. Certainly, the interface 600 may further include another application icon and the like. This is not limited in this application. It should be understood that an application window corresponding to the application interface of "Email" is the window 601, and an application window corresponding to the application interface of "HUAWEI video" is the window 602. Alternatively, the taskbar may be displayed on a right side or the like of the display. This is not limited in this application.

After the user taps the application window of "HUAWEI video" with the mouse, the application window 602 of "HUAWEI video" may obtain the mouse focus. In this case, no matter how the user moves the mouse, the window in which the mouse focus is located remains the application window of "HUAWEI video" provided that the user does not tap another window. It should be understood that an arrow shown on the window 602 is a location of the mouse focus.

It should be noted that "Inbox (0)" displayed in the application window 601 of "Email" may be understood as that the email APP does not receive a new email at this time. When the email APP receives a new message, for example, a new email, "Inbox (0)" may be changed to "Inbox (1)".

In a possible implementation, the simulator may remind the user by using application icon flickering as the prompt information. For example, it is assumed that the email APP in the simulator receives a new email. In this case, the application icon of "Email" may flicker at a specific frequency, for example, as shown in FIG. 6A(b). In this case, the notebook computer may display an interface 610. The interface 610 may include an application window 611 of "Email" and a taskbar 612. Compared with the interface 600, on the interface 610, "Inbox (0)" in the window 602 on the interface 600 may be updated to "Inbox (1)" in the application window 611, and there is a new email (that is, an email whose sender is "John" and receiving time is "Just now"). Second, the application icon of "Email" on the taskbar flickers. After the user taps the application icon of "Email", the application icon stops flickering.

It should be understood that icon flickering in this embodiment of this application is merely an example of flickering in a line filling manner shown in the figure. In actual product implementation, a flickering color may be red, blue, or the like. This is not limited in this application.

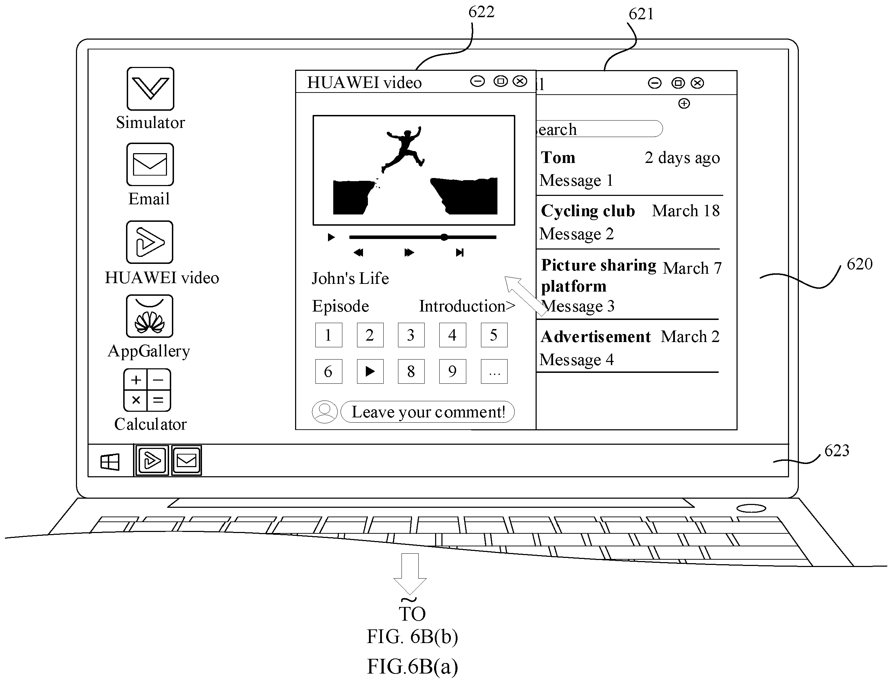

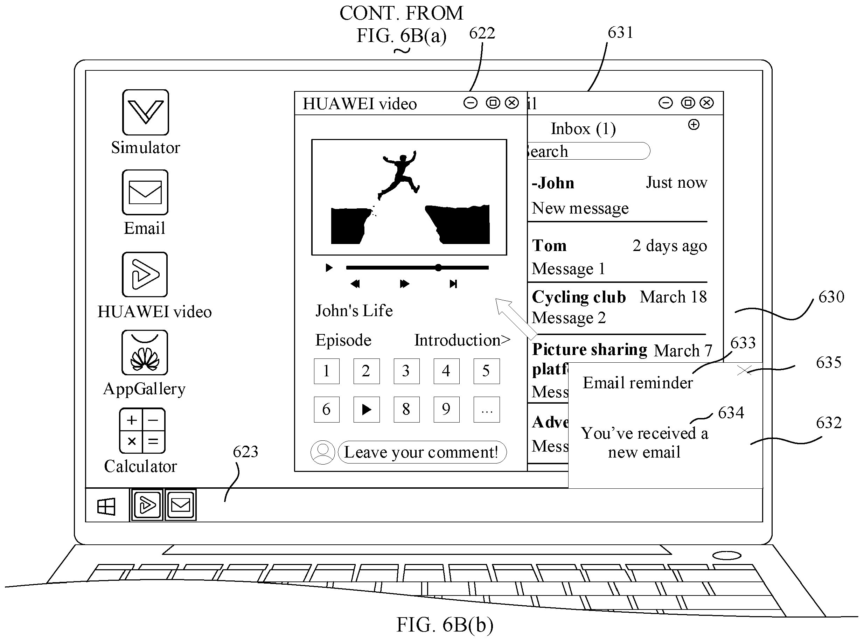

Second: As shown in FIG. 6B(a), it is assumed that the notebook computer displays an interface 620. Two application windows, for example, an application window 621 of "Email" and an application window 622 of "HUAWEI video", and a taskbar 623 may be displayed on the interface 620. The application window 621 of "Email" is overlaid by the application window 622 of "HUAWEI video", that is, there is an overlapping part between the two windows. The taskbar 623 may include an icon of an application started by the user. In this case, the mouse focus is in the application window 622 of "HUAWEI video". No matter how the user moves the mouse, the window in which the mouse focus is located remains the application window of "HUAWEI video" provided that the user does not tap another window. Certainly, the interface 620 may further include another application icon and the like. This is not limited in this application.

In another possible implementation, the simulator may remind the user by using a pop-up window as the prompt information. For example, it is assumed that the email APP in the simulator receives a new email. In this case, a quantity of new messages may be displayed in a pop-up window manner, for example, as shown in FIG. 6B(b). In this case, the notebook computer may display an interface 630. The interface 630 may include an application window 631 of "Email" and a pop-up window 632. The window 632 may specifically include first prompt information, for example, "Email reminder" 633, second prompt information "You've received a new email" 634, and a "close" button 635. Then, the user may know which application in the simulator receives a new message and a quantity of received new messages. When the user taps the "close" button 635 on the pop-up window, the notebook computer may close, in response to the operation of the user, the pop-up window displayed on the interface. Then, the user may tap the application icon of "Email" to view the received new message.

It should be understood that the first prompt information prompts the user of a source of the new message, and the second prompt information prompts the user of the quantity of new messages.

Certainly, a reminding manner may also be that the application icon of "Email" flickers at a specific frequency, and the quantity of new messages is displayed in a pop-up window manner. When the user taps a "close" button on a pop-up window, the notebook computer may close, in response to the operation of the user, the pop-up window displayed on the interface. In this case, the application icon of "Email" may keep flickering, and may stop flickering when the user taps the application icon of "Email".

Scenario 2: A first window in which the first message is located is minimized.

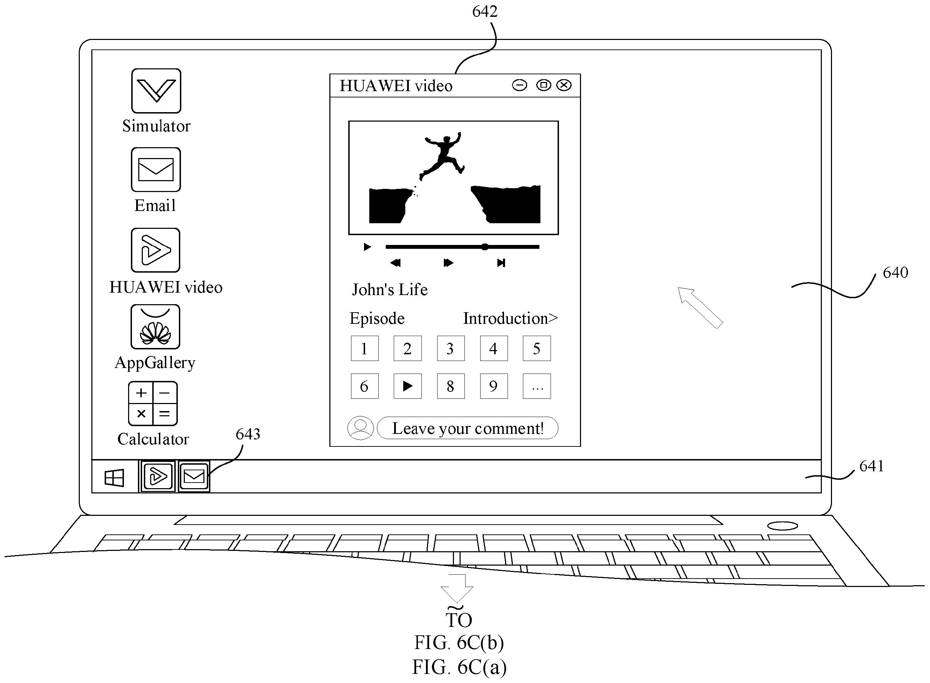

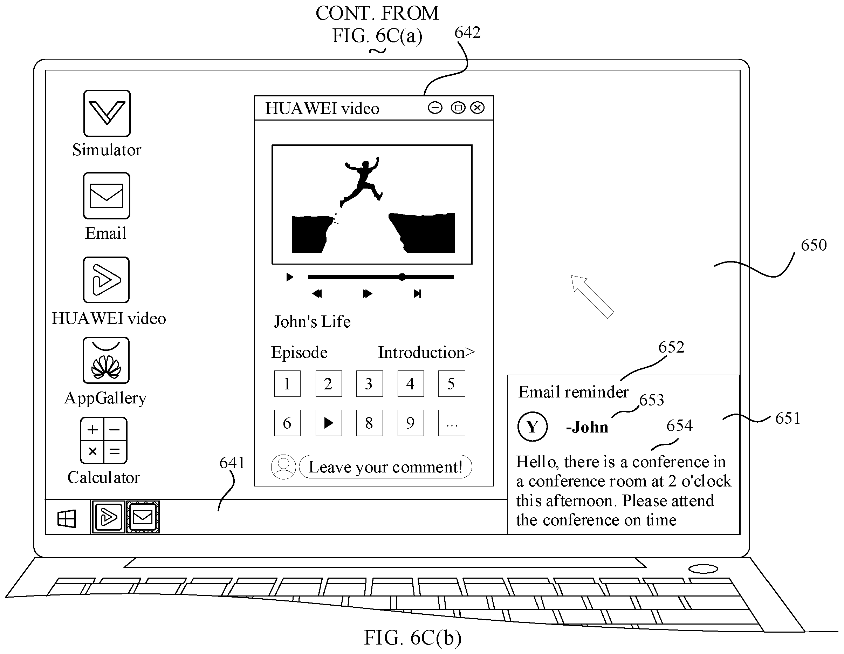

In this embodiment of this application, each application corresponds to one application window. Therefore, the first window in which the first message is located is an application window corresponding to the first application. As shown in FIG. 6C(a), it is assumed that the user minimizes an application window of "Email". In this case, the notebook computer may display an interface 640. The interface 640 may include a taskbar 641 and an application window 642 of "HUAWEI video". The taskbar 641 may include a minimized window 643 of "Email" and an application icon of "HUAWEI video". Certainly, the interface 640 may further include another application icon and the like. This is not limited in this application.

In still another possible implementation, the simulator may remind the user by using a notification as the prompt information. For example, it is assumed that the email APP in the simulator receives a new email. In this case, a quantity of new messages may be displayed in a manner of application window flickering and a notification, as shown in FIG. 6C(b). In this case, the notebook computer may display an interface 650. The interface 650 may include a notification box 651. The notification box 651 may include first prompt information, for example, "Email reminder" 652, third prompt information, for example, "John" 653, and fourth prompt information, for example, "Hello, there is a conference in a conference room at 2 o'clock this afternoon. Please attend the conference on time" 654. Certainly, the notification box 651 may further display a profile picture of a sender.

The first prompt information prompts the user of a source of the new message. The third prompt information prompts the sender of the new message. The fourth prompt information prompts the user of content of the new message.

Then, the user may know which application in the simulator receives the new message and the content of the received new message. Display time of the notification may be specified duration, for example, 30s. After the time reaches 30s, the notification may be automatically closed. Then, the user may tap the flickering application window of "Email" to view the received new message. Certainly, when the application in the simulator receives the new message, the user may be reminded only in a manner of displaying a notification. In some embodiments, the notification may be further displayed at a constant time interval until the user taps the application icon of "Email" to view the received new message, to avoid the user missing the new message.

It should be noted that the content of the new message displayed in the notification may include some content or all content. When the new message includes short content, all the content may be displayed in the notification; or when the new message includes much content, some content may be displayed in the notification. This is not limited in this application.

The foregoing merely uses some possible reminding manners for illustration. In actual product implementation, the user may be reminded through a combination of the foregoing several reminding manners or in another manner. For example, the user may be reminded in a window shaking manner. This is not specifically limited in this embodiment of this application.

It should be understood that the foregoing message reminding manner is merely an example described with a specific scenario. In actual application, the message reminding manner is not limited to a specific settled scenario. For example, in the scenario shown in FIG. 6A(a), reminding may alternatively be performed in a form of a pop-up window or a notification; or in the scenario shown in FIG. 6B(a), reminding may alternatively be performed in an application icon flickering manner.

S407: The simulator determines not to display prompt information.

If the mouse focus of the user is in a first window corresponding to the first application, the first message may be directly displayed in the first window. In this case, the user may also directly see the new message, and the user does not need to be reminded.

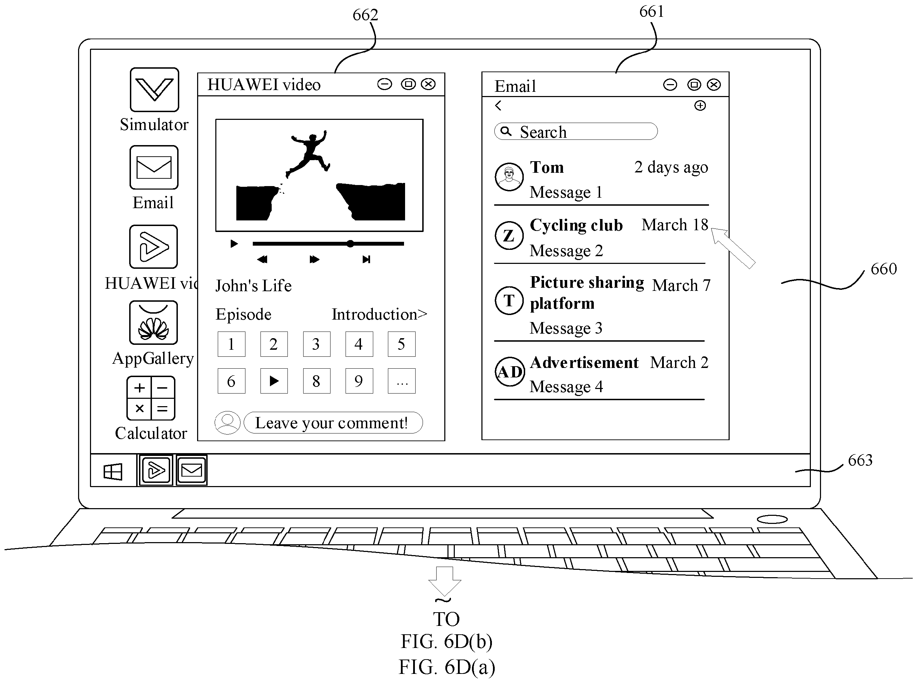

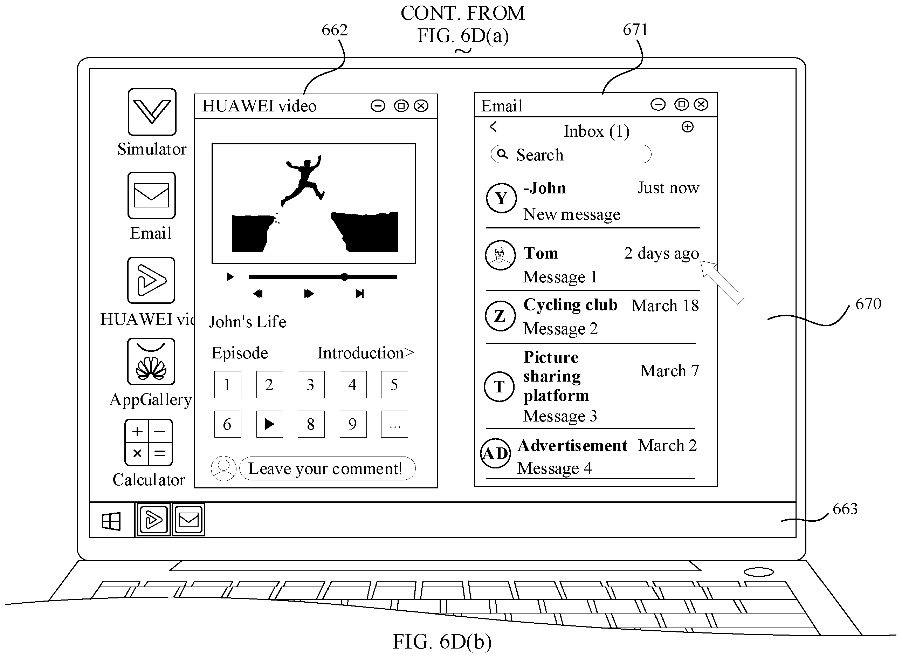

For example, as shown in FIG. 6D(a), it is assumed that the notebook computer displays an interface 660. Two application windows, for example, an application window 661 of "Email" and an application window 662 of "HUAWEI video", and a taskbar 663 may be displayed on the interface 660. It is assumed that the mouse focus of the user is in the application window 661 of "Email".

In this case, if "Email" receives a new email, the simulator may determine that the user can see the new email at this time, that is, the user does not need to be reminded in a manner such as icon flickering. Therefore, the notebook computer may display an interface 670 shown in FIG. 6D(b). The interface 670 may include an application window 671 of "Email", an application window 662 of "HUAWEI video", and a taskbar 663. The taskbar 663 may include an application icon of "Email" and an application icon of "HUAWEI video". It may be learned from the figure that the new email is an email whose sender is "John" and receiving time is "Just now".

According to the solution in this embodiment of this application, when the application in the simulator receives the new message, the terminal device may perform reminding on the new message received by the application in the simulator. In this way, a message reminder function is implemented for a foreground application, and the user can obtain and process the new message in time. Therefore, user experience is improved.

In the foregoing embodiment provided in this application, the method provided in embodiments of this application is described from a perspective of interaction between applications on the terminal device. To implement functions in the method provided in the foregoing embodiment of this application, the electronic device may include a hardware structure and/or a software module, and implement the foregoing functions in a form of the hardware structure, the software module, or a combination of the hardware structure and the software module. Whether a specific function in the foregoing functions is performed by using the hardware structure, the software module, or the combination of the hardware structure and the software module depends on a specific application and a design constraint of the technical solutions.

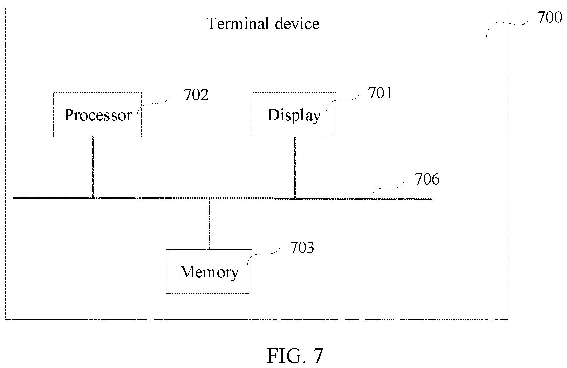

As shown in FIG. 7, some other embodiments of this application disclose an electronic device. The electronic device may be a terminal device with a display. Refer to FIG. 7. The electronic device 700 includes a display 701, one or more processors 702, one or more memories 703, a plurality of applications 704 (not shown in the figure), and one or more computer programs 705 (not shown in the figure). The foregoing devices may be connected through one or more communication buses 706.

The display 701 is configured to display a display interface of an application on the terminal device, or display prompt information. The memory 703 stores the one or more computer programs. The one or more computer programs include instructions. The processor 702 invokes the instructions stored in the memory 703, so that the terminal device 700 is enabled to perform the message reminding method in the foregoing embodiment.

In embodiments of this application, the processor 702 may be a general-purpose processor, a digital signal processor, an application-specific integrated circuit, a field programmable gate array or another programmable logic device, a discrete gate or transistor logic device, or a discrete hardware component, and may implement or perform the method, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module. The software module may be located in the memory 703. The processor 702 reads the program instructions in the memory 703, and completes the steps of the foregoing method in combination with the hardware of the processor 702.

In embodiments of this application, the memory 703 may be a non-volatile memory such as a hard disk drive (hard disk drive, HDD) or a solid-state drive (solid-state drive, SSD), or may be a volatile memory (volatile memory) such as a RAM. The memory may alternatively be but is not limited to any other medium capable of carrying or storing expected program code in a form of an instruction or a data structure and accessible by a computer. The memory in embodiments of this application may alternatively be a circuit or any other apparatus capable of implementing a storage function, and is configured to store instructions and/or data.

It may be clearly understood by a person skilled in the art that for the purpose of convenient and brief description, for a detailed working process of the foregoing apparatus and unit, reference may be made to a corresponding process in the foregoing method embodiment, and details are not described again herein.

Based on the foregoing embodiments, this application further provides a computer storage medium. The computer storage medium stores a computer program. When the computer program is executed by a computer, the computer is enabled to perform the message reminding method provided in the foregoing embodiment.

An embodiment of this application further provides a computer program product, including instructions. When the computer program product runs on a terminal device, the computer program product is enabled to perform the message reminding method provided in the foregoing embodiment.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of processes and/or blocks in the flowcharts and/or the block diagrams. These instructions may be provided for a general-purpose computer, a dedicated computer, an embedded processor, or a processor of another programmable data processing device to generate a machine, so that the instructions executed by the computer or the processor of the another programmable data processing device generate an apparatus configured to implement a specified function in one or more processes in the flowcharts and/or in one or more blocks in the block diagrams.

These computer program instructions may alternatively be stored in a computer-readable memory capable of instructing a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

## Claims

1. A message reminding method, comprising:
receiving, by a first application, a first message sent by a second application, wherein the first message comprises an identifier of the second application, the second application is an application that receives a new message, and the first application and the second application are applications in a system carried by a simulator; and
sending, by the first application, a second message to a simulator application, wherein the second message comprises the identifier of the second application, and the second message indicates the simulator to determine whether to perform reminding on the new message received by the second application.

2. The method according to claim 1, wherein there is at least one first message.

3. The method according to claim 1 or 2, wherein the receiving, by a first application, a first message sent by a second application comprises:
receiving, by the first application, the first message sent by the second application through a third application.

4. The method according to claim 1, wherein the first message further comprises a quantity of new messages received by the second application and content of the new message received by the second application.

5. The method according to claim 1, wherein the simulator is an Android simulator.

6. The method according to claim 1, wherein the first application is a desktop application, and the second application is an email application or a HUAWEI video application.

7. A message reminding method, comprising:
receiving, by a simulator, a first message sent by a first application, wherein the first message comprises an identifier of a second application, the second application is an application that receives a new message, and the first application and the second application are applications in a system carried by the simulator;
determining, by the simulator, a corresponding second window identifier based on the identifier of the second application; and
determining, by the simulator based on the second window identifier and a window identifier of a mouse focus window, whether to perform reminding on the new message received by the second application.

8. The method according to claim 7, wherein the first message is sent by the second application to the first application.

9. The method according to claim 7, wherein the first message is sent by the second application to the first application through a third application.

10. The method according to claim 7, wherein the determining, by the simulator based on the second window identifier and a window identifier of a mouse focus window, whether to perform reminding on the new message received by the second application comprises:
if the simulator determines that the second window identifier is different from the window identifier of the mouse focus window, determining, by the simulator, to perform reminding on the new message received by the second application.

11. The method according to claim 10, wherein the method further comprises:
if the simulator determines that the second window identifier is the same as the window identifier of the mouse focus window, determining, by the simulator, not to perform reminding on the new message received by the second application.

12. The method according to any one of claims 7 to 11, wherein the first message further comprises a quantity of new messages received by the second application and content of the new message received by the second application.

13. The method according to any one of claims 7 to 12, wherein a reminding manner for performing reminding on the new message received by the second application comprises at least one of the following manners: application icon flickering, application window flickering, a pop-up window, a notification, and application window shaking; and the pop-up window or the notification comprises the quantity of new messages and/or the content of the new message.

14. A terminal device, wherein the electronic device comprises a display, one or more processors, one or more memories, a plurality of applications, and one or more computer programs, wherein
the one or more computer programs are stored in the one or more memories; the one or more computer programs comprise instructions; and when the instructions are invoked and executed by the one or more processors, the terminal device is enabled to perform the method according to any one of claims 1 to 6 or the method according to any one of claims 7 to 13.

15. A computer-readable storage medium, wherein the computer-readable storage medium stores instructions; and when the instructions are run on a computer, the computer is enabled to perform the method according to any one of claims 1 to 6 or the method according to any one of claims 7 to 13.

16. A computer program product comprising instructions, wherein when the computer program product runs on a simulator of a terminal device, the computer program product is enabled to perform the method according to any one of claims 1 to 6.

17. A computer program product comprising instructions, wherein when the computer program product runs on a terminal device, the computer program product is enabled to perform the method according to any one of claims 7 to 13.
